# EUROPEAN PATENT APPLICATION

(11) **EP 4 693 059 A2**
(43) Date of publication of application: **11.02.2026**
(21) Application number: 25215533.8
(22) Date of filing: 13.11.2025
(51) Int. Cl.: G06F 15/167

(54) **INTEGRATED CIRCUIT AND METHOD FOR DATA TRANSMISSION, MEDIUM, DEVICE, AND CHIP**

(30) Priority: 31.12.2024 CN 202411996732
(71) Applicant: Beijing Horizon Robotics Technology Research and Development Co., Ltd., Beijing 100094 (CN)
(72) Inventor: Qu, Xinyuan, Beijing, 100094 (CN)
(74) Representative: Patentanwälte Magenbauer & Kollegen Partnerschaft mbB

(57) **Abstract**

Embodiments of this disclosure disclose an integrated circuit and a method for data transmission, a medium, a device, and a chip. The integrated circuit includes at least two processing elements, where any first processing element in the at least two processing elements includes a first buffer and a first memory, and the first processing element is configured to: determine, according to a current buffer state of the first buffer, a data transmission priority between the first memory and a second processing element cascaded preceding the first processing element; obtain to-be-transmitted data according to the data transmission priority; and buffer the to-be-transmitted data into the first buffer, so that the to-be-transmitted data is readable by a circuit cascaded subsequently to the first processing element.

## Description

### TECHNICAL FIELD

This disclosure relates to technologies of integrated circuits, and in particular, to an integrated circuit and a method for data transmission, a medium, a device, and a chip.

### BACKGROUND

In on-chip interconnection networks, a ring interconnection network is a common topology structure. Data transmission in the ring interconnection network forms a data loop. When all buffers (such as a first in first out queue) on the data loop are full, circular data dependency is formed on the data loop, and all data (or referred to as transmission loads) cannot be transmitted forward, which may easily lead to deadlocks, affecting data transmission efficiency.

### SUMMARY

Embodiments of this disclosure provide an integrated circuit and a method for data transmission, a medium, a device, and a chip, to avoid deadlocks on a data loop and ensure data transmission efficiency.

According to a first aspect of an embodiment of this disclosure, an integrated circuit for data transmission is provided, including: at least two processing elements, wherein any first processing element in the at least two processing elements includes a first buffer and a first memory, and the first processing element is configured to: determine, according to a current buffer state of the first buffer, a data transmission priority between the first memory and a second processing element cascaded preceding the first processing element; obtain to-be-transmitted data according to the data transmission priority; and buffer the to-be-transmitted data into the first buffer, so that the to-be-transmitted data is readable by a circuit cascaded subsequently to the first processing element.

According to a second aspect of an embodiment of this disclosure, a data transmission method is provided, including: determining, based on a current buffer state of a first buffer in a first processing element, a data transmission priority between a first memory in the first processing element and a second processing element cascaded preceding the first processing element; obtaining to-be-transmitted data according to the data transmission priority; and buffering the to-be-transmitted data into the first buffer, so that the to-be-transmitted data is readable by a circuit cascaded subsequently to the first processing element.

According to a third aspect of an embodiment of this disclosure, a computer readable storage medium is provided. The storage medium stores a computer program, which, when executed by a processor, causes the processor to implement the data transmission method according to any one of the foregoing embodiments of this disclosure.

According to a fourth aspect of an embodiment of this disclosure, an electronic device is provided. The electronic device includes: a processor; and a second memory configured to store processor-executable instructions. The processor is configured to read the executable instructions from the second memory, and execute the instructions to implement the data transmission method according to any one of the foregoing embodiments of this disclosure.

According to a fifth aspect of an embodiment of this disclosure, a computer program product is provided. When instructions in the computer program product are executed by a processor, the data transmission method according to any one of the foregoing embodiments of this disclosure is implemented.

According to a sixth aspect of an embodiment of this disclosure, a chip is provided, including: the integrated circuit for data transmission according to any one of the foregoing embodiments of this disclosure.

Based on the integrated circuit and method for data transmission, the medium, the device, and the chip that are provided in the foregoing embodiments of this disclosure, for any processing element (referred to as the first processing element) on a data transmission path, data transmission priority of two data sources (that is, the first memory and the second processing element) can be determined according to the current buffer state of the first buffer that is inside the first processing element and is configured to cache the to-be-transmitted data. Further, the to-be-transmitted data is obtained according to the data transmission priority and is buffered into the first buffer. In this way, when remaining storage space of the first buffer is relatively small, the to-be-transmitted data may be preferentially obtained from a data source with higher data transmission priority. For example, the to-be-transmitted data is preferentially obtained from the second processing element. In this way, a buffer of the second processing element can release a part of buffer space, so that at any moment, at least one buffer on the data transmission path is not full. Thus, a situation where all buffers on the data transmission path are full may be avoided, thereby effectively resolving a problem of deadlocks in a ring interconnection network.

### BRIEF DESCRIPTION OF THE DRAWINGS

FIG. 1 is an exemplary application scenario of an integrated circuit for data transmission according to this disclosure;
FIG. 2 is a schematic diagram of a structure of an integrated circuit for data transmission according to an exemplary embodiment of this disclosure;
FIG. 3 is a schematic diagram of a structure of an integrated circuit for data transmission according to another exemplary embodiment of this disclosure;
FIG. 4 is a schematic diagram of a structure of a processing element according to an exemplary embodiment of this disclosure;
FIG. 5 is a schematic diagram of a structure of an integrated circuit for data transmission according to still another exemplary embodiment of this disclosure;
FIG. 6 is a schematic flowchart of a data transmission method according to an exemplary embodiment of this disclosure;
FIG. 7 is a schematic flowchart of a data transmission method according to another exemplary embodiment of this disclosure;
FIG. 8 is a schematic flowchart of a data transmission method according to still another exemplary embodiment of this disclosure;
FIG. 9 is a schematic flowchart of a data transmission method according to yet another exemplary embodiment of this disclosure;
FIG. 10 is a schematic flowchart of a data transmission method according to still yet another exemplary embodiment of this disclosure;
FIG. 11 is a schematic flowchart of a data transmission method according to a further exemplary embodiment of this disclosure; and
FIG. 12 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in a topology structure of an on-chip ring interconnection network of a chip, data transmission in the ring interconnection network forms a data loop. When all buffers (such as a first in first out queue) on the data loop are full, circular data dependency is formed on the data loop, and all data (or referred to as transmission loads) cannot be transmitted forward, which may easily lead to deadlocks to the ring interconnection network, affecting data transmission efficiency.

### Exemplary overview

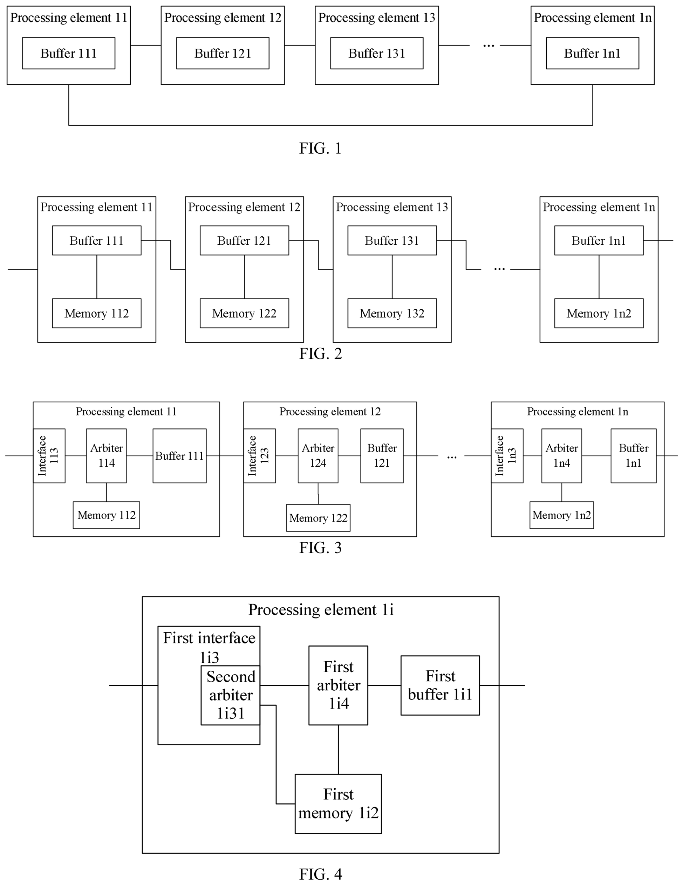

FIG. 1 is an exemplary application scenario of an integrated circuit for data transmission according to this disclosure. As shown in FIG. 1, taking an on-chip ring interconnection network as an example, the ring interconnection network may include at least two processing elements, which are interconnected to form the ring interconnection network. As shown in FIG. 1, the ring interconnection network includes a total of n processing elements, that is, a processing element 11, a processing element 12, ..., and a processing element 1n, where n is an integer greater than 1. Each processing element 1i (i=1, 2, ..., or n) may include a buffer li1. During data transmission, each processing element 1i may cache to-be-transmitted data through the buffer li1. For any processing element 1i, a processing element 1j (if i is less than n, j=i+1; and if i=n, j=1) cascaded subsequently to the processing element 1i reads the to-be-transmitted data from the buffer li1 of the processing element 1i, thereby achieving data transmission. The to-be-transmitted data in the processing element 1i has two data sources, that is, a processing element 1k (if i is greater than 1, k=i-1; and if i=1, k=n) cascaded preceding the processing element 1i and a memory inside the processing element 1i. To be specific, the processing element 1i may cache data from the processing element 1k cascaded preceding into the buffer 1i1, or cache data from the memory inside the processing element 1i into the buffer 1i1, so that the processing element 1j cascaded subsequently can read the to-be-transmitted data from the buffer 1i1. The data of the processing element 1k cascaded preceding comes from a buffer 1k1 in the processing element 1k. According to the integrated circuit for data transmission in this disclosure, any processing element (referred to as a first processing element, and may also be referred to as a first processing unit) 1i in the various processing elements includes a buffer (referred to as a first buffer) 1i1 and a memory (referred to as a first memory). The first processing element 1i is configured to: determine, according to a current buffer state of the first buffer 1i1, a data transmission priority between the first memory and a second processing element 1k cascaded preceding the first processing element 1i; obtain to-be-transmitted data according to the data transmission priority; and buffer the to-be-transmitted data into the first buffer 1i1, so that the to-be-transmitted data is readable by a subsequently cascaded circuit (such as the processing element 1j cascaded subsequently) of the first processing element 1i, so as to achieve data transmission. Thus, when remaining storage space of the first buffer 1i1 is relatively small, the to-be-transmitted data may be preferentially obtained from a data source with higher data transmission priority. For example, the to-be-transmitted data is preferentially obtained from the second processing element 1k. In this way, the buffer 1k1 of the second processing element 1k can release a part of buffer space to ensure that at any moment, at least one buffer on the data transmission path is not full of data, so that a situation where all buffers on the data transmission path are full of data may be avoided, thereby effectively resolving a problem of deadlocks in a ring interconnection network.

In practical application, the integrated circuit for data transmission in embodiments of this disclosure is not limited to being applied to circular interconnect networks, but may also be applied to other non-circular topology structures. This is not specifically limited.

### Exemplary apparatus

FIG. 2 is a schematic diagram of a structure of an integrated circuit for data transmission according to an exemplary embodiment of this disclosure. This embodiment may be applied to chips, for example, may be specifically applied to chips in terminal devices such as an in-vehicle computing platform, a mobile phone, and a tablet. As shown in FIG. 2, the integrated circuit for data transmission (integrated circuit for short) in this embodiment of this disclosure may include at least two processing elements. In FIG. 2, n processing elements are used as an example, that is, a processing element 11, a processing element 12, ..., and a processing element 1n, where n is an integer greater than 1. Any first processing element 1i (i=1, 2, ..., or n) in the at least two processing elements includes a buffer (referred to as a first buffer) 1i1 and a memory (referred to as a first memory) 1i2.

The first processing element 1i is configured to:
determine, according to a current buffer state of the first buffer 1i1, data transmission priority (or priority for short) of the first memory 1i2 and a second processing element 1k (if i is greater than 1, k=i-1) cascaded preceding the first processing element 1i; obtain to-be-transmitted data according to the data transmission priority; and buffer the to-be-transmitted data into the first buffer 1i1, so that the to-be-transmitted data is readable by a circuit cascaded subsequently to the first processing element 1i.

A quantity of the processing elements included in the integrated circuit may be determined according to requirements of an actual application scenario, which is not limited in this embodiment of this disclosure. For example, a quantity n of the processing elements may be 2, 3, 4,....

In some optional embodiments, the processing element 1i may be any device that requires data interaction with other devices. For example, in intelligent driving, security monitoring, and other fields involving computer vision, if data transmission is required between processing devices such as a CPU (central processing unit), a GPU (graphics processing unit), an NPU (neural network processing unit), a DPU (data processing unit), a TPU (tensor processing unit), and an ISP (image signal processing) unit, these processing devices may be used as processing elements in the embodiments of this disclosure, respectively.

In some optional embodiments, the at least two processing elements are interconnected to form a circular interconnection topology structure. Referring to FIG. 2, for the processing element 11, if the processing element 11 is interconnected with the processing element 1n, a circular interconnection topology structure is formed. A circuit cascaded preceding the processing element 11 is the processing element 1n, and a circuit cascaded subsequently to the processing element 1n is the processing element 11. For example, in a scenario of intelligent driving, data interaction is required between processing elements for perception processing, processing elements for positioning processing, and processing elements for planning and control, which may be used as the processing elements in the embodiments of this disclosure, respectively. Perception processing is a process of sensing a surrounding environment of a vehicle based on sensor data, to obtain a perception result. The perception result may include perceived obstacles, road elements, and the like around the vehicle. Positioning processing is a process of positioning the vehicle based on the perception result in a real-time manner. Planning and control is a process of performing path planning based on the perception result and the positioning result, and controlling a driving status of the vehicle according to a planned path. The driving status of the vehicle also needs to be provided to the perception processing elements for further perception processing. In this way, the various processing elements are interconnected to form a circular interconnection topology structure. It may be understood that the processing elements for perception processing, the processing elements for positioning processing, and the processing elements for planning and control that are described above are merely for exemplary description, and do not impose any limitation on the embodiments of this application. In practical application, it is not limited that the processing of perception, positioning, and planning and control corresponds to a processing element separately. For example, at least one processing element may collaborate to implement intelligent driving functions such as perception, positioning, and planning and control. The at least one processing element may be used as the processing element in the embodiments of this disclosure. In addition, the processing elements in the embodiments of this disclosure are not limited to the processing elements in the scenario of intelligent driving. As long as data transmission is required between a plurality of processing elements, data transmission may be implemented by using the integrated circuit for data transmission in the embodiments of this disclosure.

In some optional embodiments, the buffer 1i1 may be any memory having a buffering function. For example, the buffer 1i1 may be a FIFO (first input first output) buffer or another type of buffer.

In some optional embodiments, the memory 1i2 may be any memory having a data storage function. For example, the memory 1i2 may include DRAMs (dynamic random access memories), which specifically are, for example, a DDR (double data rate synchronous dynamic random access memory) and an LPDDR (low power double data rate synchronous dynamic random access memory). This is not specifically limited.

In some optional embodiments, the current buffer state of the first buffer 1i1 indicates a degree to which the first buffer 1i1 is occupied. The current buffer state may include various preset states. For example, based on the degree to which the first buffer 1i1 is occupied, there may be a plurality of preset states at different levels. The various preset states may include, for example, an empty state, an almost empty state, an intermediate state, an almost full state, a full state, and other preset states. The empty state may indicate that a ratio of occupied buffer space to overall buffer space (which may be referred to as an occupied ratio for short) is less than a first threshold. The almost empty state (which may also be referred to as a nearly-empty-but-not-empty state) may indicate that the ratio of the occupied buffer space to the overall buffer space is greater than (or equal to) the first threshold and is less than a second threshold. The intermediate state may indicate that the ratio of the occupied buffer space to the overall buffer space is greater than (or equal to) the second threshold and is less than a third threshold. The almost full state (which may also be referred to as a nearly-full-but-not-full state) may indicate that the ratio of the occupied buffer space to the overall buffer space is greater than (or equal to) the third threshold and is less than a fourth threshold. The full state (which may also be referred to as a full storage status) may indicate that the ratio of the occupied buffer space to the overall buffer space is greater than or equal to the fourth threshold. The first threshold, the second threshold, the third threshold, and the fourth threshold may be set according to actual requirements. For example, the third threshold and the fourth threshold are determined based on bandwidth of each data transmission, so that when the occupied ratio is greater than the fourth threshold, remaining idle buffer space cannot support buffering of data that is transmitted once. In other words, the remaining idle buffer space is smaller than a size of the to-be-transmitted data. When the occupied ratio is greater than the third threshold and less than the fourth threshold, the remaining idle buffer space can support buffering of data transmitted at least once. A specific value of each threshold is not limited in the embodiments of this disclosure. For another example, the preset states may include a first preset state (that is, the full storage status, indicating that the occupied ratio is greater than or equal to the fourth threshold), a second preset state (that is, the nearly-full-but-not-full state, indicating that the occupied ratio is less than the fourth threshold and is greater than or equal to the third threshold), and other preset states (indicating that the occupied ratio is less than the third threshold). The other preset states cover the empty state, the almost empty state, and the intermediate state that are described above. Specific classification of buffer states is not limited.

In some optional embodiments, the second processing element 1k cascaded preceding the first processing element 1i refers to a preceding processing element on which input data of the first processing element li depends. As shown in FIG. 2, a second processing element cascaded preceding the processing element 12 is the processing element 11, and a second processing element cascaded preceding a processing element 13 is the processing element 12. The data transmission priority between the first memory 1i2 and the second processing element 1k may include the following two cases: The data transmission priority of the second processing element 1k is higher than that of the first memory 1i2; and the data transmission priority of the second processing element 1k is same as that of the first memory 1i2.

In some optional embodiments, correspondences between a plurality of buffer states of the first buffer 1i1 and the data transmission priority may be pre-set. The data transmission priority between the first memory 1i2 and the second processing element 1k may be determined according to the current buffer state of the first buffer 1i1 and the pre-configured correspondences between the plurality of buffer states and the data transmission priority. For example, data transmission priority corresponding to the empty state, the almost empty state, and the intermediate state indicates that the data transmission priority of the first memory 1i2 is same as that of the second processing element 1k, while data transmission priority corresponding to the almost full state indicates that the data transmission priority of the second processing element 1k is higher than that of the first memory 112. The correspondences between the plurality of buffer states and the data transmission priority may be set according to actual requirements, which are not limited to the relationships described above.

In some optional embodiments, the data transmission priority between the first memory 1i2 and the second processing element 1k may also include a priority type indicating that obtaining of the to-be-transmitted data from the first memory 1i2 and the second processing element 1k needs to be paused. For example, the data transmission priority may include three types: preferential, same, and pausing. Preferential indicates that the data transmission priority of the second processing element 1k is higher than that of the first memory 1i2; same indicates that the data transmission priority of the second processing element 1k is same as that of the first memory 1i2; and pausing indicates that the obtaining of the to-be-transmitted data needs to be paused. For example, when the current buffer state of the first buffer 1i1 is the full storage status, it is determined that the data transmission priority between the second processing element 1k and the first memory 1i2 is pausing.

In some optional embodiments, priority numbers may be used to represent the data transmission priority between the first memory 1i2 and the second processing element 1k, respectively. For example, if the priority of the second processing element 1k is 1 and the priority of the first memory 1i2 is 2, it indicates that the priority of the second processing element 1k is at a level 1 while the priority of the first memory 1i2 is at a level 2, wherein the level 1 is higher than the level 2. In practical application, the data transmission priority may also be represented in other manners, provided that the data transmission priority between the first memory 1i2 and the second processing element 1k can be determined.

In some optional embodiments, the to-be-transmitted data is data that needs to be transmitted to the subsequently cascaded circuit, by the first processing element 1i. Possible data sources for the to-be-transmitted data include the second processing element 1k and the first memory 1i2. The data sources of the current to-be-transmitted data is determined by the data transmission priority between the first memory 112 and the second processing element 1k, and the to-be-transmitted data is preferentially obtained from a data source with higher priority. If the data transmission priority of the first memory 1i2 is same as that of the second processing element 1k, both the first memory 1i2 and the second processing element 1k may be used as data sources, and data of both the first memory 112 and the second processing element 1k may be used as the to-be-transmitted data. If the data transmission priority of the second processing element 1k is higher than the priority of the first memory 112, the to-be transmitted data is preferentially obtained from the second processing element 1k, that is, the data from the second processing element 1k (which may be referred to as first data) is preferentially used as the to-be transmitted data, which is buffered into the first buffer li1. For the data of the first memory 1i2 (which may be referred to as second data), if the first buffer 1i1 can further store the second data, the second data may be buffered into the first buffer 1i1. When the first buffer 1i1 cannot buffer the second data, it is possible to pause obtaining of the second data from the first memory 1i2, but obtain the second data from the first memory 1i2 after buffer space of the first buffer 1i1 is released. The second data is used as the to-be-transmitted data, which is buffered into the first buffer li1. The data buffered in the first buffer 1i1 is data that needs to be transmitted to the subsequently cascaded circuit. The subsequently cascaded circuit may read data from the first buffer 1i1, so that data is transmitted from the first processing element 1i to the subsequently cascaded circuit. Each processing element may implement data transmission according to the foregoing process, thereby implementing data transmission between the processing elements cascaded preceding and/or subsequently.

In some optional embodiments, the circuit cascaded subsequently to the first processing element 1i may be determined based on a position of the first processing element 1i in the processing elements. For example, for the processing element 1n, if the buffer 1n1 is connected to the processing element 11, the circuit cascaded subsequently to the processing element 1n is the processing element 11. If the buffer 1n1 of the processing element 1n is connected to an output interface or a pin of the integrated circuit, a circuit cascaded subsequently to the buffer 1n1 is an external circuit of the integrated circuit. For another processing element 1i (where i is not equal to n), the circuit cascaded subsequently to the processing element 1i is 1j (j=i+1).

In some optional embodiments, there may be one or more processing elements 1j cascaded subsequently to the first processing element 1i, which is not specifically limited. For example, processing elements cascaded subsequently to the perception processing element may include a positioning processing element and a planning and control element. To be specific, the perception result of the perception processing element may be transmitted to the positioning processing element and the planning and control element, respectively. The positioning processing element locates the vehicle based on the perception result, and transmits the positioning result to the planning and control element, which performs planning and control based on the perception result and the positioning result.

According to the integrated circuit for data transmission that is provided in the embodiments, for any processing element (referred to as the first processing element) on a data transmission path, data transmission priority of two data sources (that is, the first memory and the second processing element) may be determined according to the current buffer state of the first buffer that is inside the first processing element and is configured to cache the to-be-transmitted data. Further, the to-be-transmitted data is obtained according to the data transmission priority and is buffered into the first buffer. In this way, when the remaining storage space in the first buffer is relatively small, the to-be-transmitted data may be preferentially obtained from the data source with higher data transmission priority. For example, the to-be-transmitted data is preferentially obtained from the second processing element, thus a buffer of the second processing element can release a part of buffer space, so that at any moment, at least one buffer on the data transmission path is not full. Thus, a situation where all buffers on the data transmission path are full may be avoided, thereby effectively resolving a problem of deadlocks in a ring interconnection network.

FIG. 3 is a schematic diagram of a structure of an integrated circuit for data transmission according to another exemplary embodiment of this disclosure.

In some optional embodiments, on the basis of any one of the foregoing embodiments, as shown in FIG. 3, the first processing element 1i also includes an interface (referred to as a first interface) 1i3 and an arbiter (referred to as a first arbiter) 1i4.

The first interface 1i3 is configured to receive the first data from the second processing element 1k.

The first arbiter 1i4 is configured to: determine the data transmission priority between the first memory 1i2 and the second processing element 1k according to the current buffer state of the first buffer 1i1; determine, according to the data transmission priority, at least one of the first data received by the first interface 1i3 and the second data in the first memory 1i2 as the to-be-transmitted data; and buffer the to-be-transmitted data into the first buffer 1i1.

The first interface 1i4 may be an interface that meets a corresponding communication protocol between the processing elements. The first processing element 1i may read data from the buffer 1k1 of the second processing element 1k through the first interface 1i4, and take the read data as the first data.

In some optional embodiments, the first interface 1i4 is connected to the second processing element 1k and the first arbiter 1i4, respectively. The first arbiter 1i4 is connected to the first memory 1i2 and the first buffer 1i1, respectively.

In some optional embodiments, the first arbiter 1i4 may be any logic device, controller, processor, or the like that has corresponding arbitration functions. The first arbiter 1i4 may be implemented based on hardware, software, or a combination of hardware and software, which is not specifically limited. The first arbiter 1i4 is configured to: determine the data transmission priority between the first memory 1i2 and the second processing element 1k according to the current buffer state of the first buffer 1i1; if the priority of the second processing element 1k is higher than that of the first memory 1i2, determine the first data received by the first interface 1i3 as the to-be transmitted data and cache the to-be transmitted data into first buffer 1i1; and if the priority of the second processing element 1k is same as that of the first memory 1i2, take the first data and the second data in the first memory 1i2 as the to-be-transmitted data, and buffer the first data and second data into the first buffer 1i1.

In the embodiments of this disclosure, the first processing element communicates with the second processing element through the first interface, receives the first data from the second processing element, and further arbitrates the first data and the second data in the first memory by using the first arbiter according to the current buffer state of the first buffer, so as to determine the to-be-transmitted data, which is buffered into the first buffer, thereby achieving effective control of data transmission. In this case, when the first buffer is about to be full, the to-be-transmitted data is preferentially obtained from the second processing element, so that the buffer of the second processing element can release a part of buffer space, so as to ensure that there is always at least one buffer that is not full on the data transmission path, thereby avoiding a problem of deadlocks.

In some optional embodiments, the first arbiter 1i4 is further configured to:

determine the current buffer state of the first buffer 1i1 according to a state signal output by the first buffer 1i1.

The state signal output by the first buffer 1i1 represents a current degree to which the first buffer 1i1 is occupied.

In some optional embodiments, the state signal output by the first buffer 1i1 may be obtained by monitoring occupancy of the buffer space by using the first buffer. For example, current storage capacity of the first buffer 1i1 may be determined by counting a difference between quantities of writes and reads, and the state signal that needs to be output by the first buffer li1 may be determined based on the current storage capacity and total storage capacity of the first buffer. For another example, a read address and a write address of the buffer space are respectively directed by a read pointer and a write pointer, and the state signal that needs to be output by the first buffer 1i1 is determined based on relationships between the read address and the write address and an address range of the buffer space of the first buffer 1i1. A specific manner for determining the state signal output by the first buffer 1i1 is determined by the specific function of the first buffer 1i1, which is not limited in the embodiments of this disclosure.

In some optional embodiments, the integrated circuit in the embodiments of this disclosure may further include a control unit, which is configured to determine the current buffer state of the first buffer 1i1 according to the state signal output by the first buffer 1i1. The control unit is respectively connected to the first buffer 1i1 and the first arbiter 1i4, and transmits the current buffer state to the first arbiter 1i4. The first arbiter 1i4 determines the data transmission priority between the first memory 1i2 and the second processing element 1k according to the current buffer state, obtains the to-be-transmitted data according to the data transmission priority, and caches the to-be-transmitted data into the first buffer 1i1.

In some optional embodiments, the state signal may represent different buffer states of the first buffer 1i1 by using different signal values. For example, if the state signal is a first signal value, it indicates that the first buffer 1i1 is in the first preset state (such as the full storage status); if the state signal value is a second signal value, it indicates that the first buffer 1i1 is in the second preset state (such as the nearly-full-but-not-full state); and if the state signal value is a third signal value, it indicates that the first buffer 1i1 is in a third preset state (such as a non-almost full state).

In some optional embodiments, the state signal may include a plurality of state signals, such as a first state signal (such as a full signal indicating whether storage is full), a second state signal (such as an almost full signal indicating whether it is almost full), a third state signal (such as an almost empty signal indicating whether it is almost empty), and a fourth state signal (such as an empty signal indicating whether it is empty). Further, the current buffer state of the first buffer 1i1 may be comprehensively determined based on current signal values of the plurality of state signals. The specific state signal may be determined based on an output function of the first buffer li1. For example, a FIFO buffer may output the full signal, the almost full signal, the almost empty signal, and the empty signal, where each signal may include two preset values, such as 1 and 0. For the full signal, 1 represents full storage and 0 represents non-full. For the almost full signal, 1 indicates that it is almost full, and 0 indicates that it is not almost full. For the almost empty signal, 1 indicates that it is almost empty, and 0 indicates that it is not almost empty. For the empty signal, 1 indicates empty and 0 indicates non-empty. Non-full includes various cases such as almost full and non-almost full, and non-almost full includes various cases such as non-almost empty, almost empty, and empty. Therefore, the current buffer state of the first buffer 1i1 may be determined by combining the specific signal values of the plurality of state signals. For example, if the first state signal is a first preset value (such as 1), it may be determined that the current buffer state of the first buffer 1i1 is in the full storage status (that is, the first preset state). If the first state signal is a second preset value (such as 0), a value of the second state signal may be further determined. If the second state signal is the first preset value, it may be determined that the current buffer state of the first buffer 1i1 is in the nearly-full-but-not-full state (that is, the second preset state).

In embodiments of this disclosure, the current buffer state of the first buffer is determined according to the state signal output by the first buffer. Since the state signal output by the first buffer represents the current degree to which the first buffer is occupied, real-time performance and accuracy of the current buffer state may be ensured.

In some optional embodiments, the state signal includes the first state signal, the second state signal, and the third state signal.

The first state signal may be represented as the full signal, indicating whether the first buffer 1i1 is currently full. The second state signal may be represented as the almost full signal, indicating whether the first buffer 1i1 is currently almost full. The third state signal may be represented as the almost empty signal, indicating whether the first buffer 1i1 is currently almost empty. Optionally, the state signal may also include a fourth state signal, which may be represented as the empty signal, indicating whether the first buffer 1i1 is currently empty.

The first arbiter 1i4 is configured to:
in response to that the first state signal is the first preset value, determine that the current buffer state is the first preset state; or in response to that the first state signal is the second preset value and the second state signal is the first preset value, determine that the current buffer state is the second preset state; or in response to that the second state signal is the second preset value, determine that the current buffer state is the third preset state; or in response to that the third state signal is the first preset value, determine that the current buffer state is a fourth preset state.

The first preset value and the second preset value may be any two different preset values used to represent different semantic meanings. For example, the first preset value is 1 and the second preset value is 0. Alternatively, the first preset value is 0 and the second preset value is 1. The specific values of the first preset value and the second preset value are not limited. Description is made in the embodiments of this disclosure by using an example in which the first preset value is 1 and the second preset value is 0.

In some optional embodiments, the first state signal is the first preset value (such as 1), indicating that the current buffer state is the full storage status (that is, the first preset state), which also indicates that the first buffer 1i1 is currently in the full storage status. If the first state signal is the second preset value (such as 0), it indicates that the first buffer 1i1 currently is not full, and then the current buffer state of the first buffer 1i1 is determined based on the second state signal. If the second state signal is the first preset value (such as 1), it indicates that the first buffer 1i1 is currently in a state of being nearly full but not full (almost full for short) (that is, the second preset state), which also indicates that the first buffer 1i1 is approaching a full storage status and there is a small amount of available buffer space. If the second state signal is the second preset value (such as 0), it indicates that the first buffer 1i1 is currently in the non-almost full state (that is, the third preset state). In other words, the current storage capacity of the first buffer 1i1 has not yet met a condition of almost full (for example, the occupied ratio is less than the third threshold). If the third state signal is the first preset value (such as 1), it indicates that the first buffer 1i1 is currently in the almost empty state (that is, the fourth preset state). In other words, the current storage capacity of the first buffer 1i1 is very small and is almost empty.

In the embodiments of this disclosure, the current buffer state of the first buffer is determined through three state signals, which provides accurate and effective reference for determining the data transmission priority of the first memory and the second processing element.

In some optional embodiments, the first arbiter 1i4 is configured to:

in response to that the current buffer state is the second preset state, determine that the data transmission priority is to preferentially obtain the to-be-transmitted data from the second processing element 1k; or in response to that the current buffer state is the third preset state or the fourth preset state, determine that the data transmission priority indicates that priority of the second processing element 1k is same as that of the first memory 1i2.

The current buffer state is the second preset state, indicating that the first buffer 1i1 is currently in the nearly-full-but-not-full state, and the remaining idle buffer space is relatively small. To avoid all buffers on the data transmission path being full, it is determined that the priority of the second processing element 1k is higher than that of the first memory 1i2, so that the to-be-transmitted data is preferentially obtained from the buffer 1k1 of the second processing element 1k. In this case, the buffer of the second processing element 1k releases a part of buffer space, so as to ensure that at least one buffer on the data transmission path is not full, thereby avoiding a problem of deadlocks. When the current buffer state is the third preset state or the fourth preset state, it indicates that the first buffer 1i1 is currently in the non-almost full state, and has sufficient idle buffer space to support obtaining the to-be-transmitted data from the second processing element 1k and the first memory 1i2. Therefore, it is determined that the data transmission priority indicates that the priority of the second processing element 1k is same as that of the first memory 1i2. If there is currently both the first data from the second processing element 1k and the second data from the first memory 112, the first data and the second data may be respectively used as to-be-transmitted data to be buffered into the first buffer 1i1. It may be understood that when the data transmission priority indicates that the priority of the second processing element 1k is same as that of the first memory 1i2, if there is only the first data from the second processing element 1k at a current moment, the first data is used as the to-be-transmitted data; and if there is only the second data from the first memory 1i2 at the current moment, the second data is used as the to-be-transmitted data.

In the embodiments of this disclosure, when the current buffer state of the first buffer is the nearly-full-but-not-full state, due to the small remaining idle buffer space, the to-be-transmitted data is preferentially obtained from the second processing element, so that the buffer of the second processing element may release a part of buffer space. Thus, it may be ensured that there is always at least one buffer that is not full on the data transmission path, thereby effectively avoiding the problem of deadlocks.

In some optional embodiments, the first arbiter 1i4 is configured to:
in response to that the current buffer state is the second preset state, determine that the data transmission priority is to obtain the first data only from the second processing element 1k to serve as the to-be-transmitted data, and pause obtaining of data from the first memory 1i2.

When the current buffer state is the second preset state, it indicates that the first buffer 1i1 is currently in the nearly-full-but-not-full state, and the remaining idle buffer space is relatively small. In this case, it is determined that the data transmission priority is to obtain the to-be-transmitted data only from the second processing element 1k, and pause the obtaining of data from the first memory 1i2. In other words, only the first data from the second processing element is used as the to-be-transmitted data and is buffered into the first buffer 1i1, and the second data is temporarily not obtained from the first memory 1i2.

In the embodiments of this disclosure, when the first buffer is in the nearly-full-but-not-full state, it is merely supported to obtain the to-be-transmitted data from the second processing element, and the obtaining of data from the first memory is paused, so as to ensure that there is always at least one buffer that is not full on the data transmission path, thereby effectively avoiding the problem of deadlocks.

In some optional embodiments, the first arbiter is further configured to: after the obtaining of data from the first memory 1i2 is paused, in response to that the current buffer state changes to the third preset state or the fourth preset state, restart obtaining to-be-transmitted data from the first memory 1i2 and buffer the to-be-transmitted data into the first buffer 1i1.

After the obtaining data from the first memory 1i2 is paused, with constant flow of data and constant operation of the processing elements, the buffer state of the first buffer 1i1 may change in a real-time manner. If the current buffer state changes from the second preset state to the third preset state or the fourth preset state, it indicates that the current buffer state of the first buffer 1i1 changes to the non-almost full state or the almost empty state, and there is sufficient buffer space to support buffering both the data from the second processing element 1k and the data from the first memory 1i2. Therefore, it is possible to restart obtaining the to-be-transmitted data from the first memory 1i2 and buffer the to-be-transmitted data into the first buffer 1i1.

In the embodiments of this disclosure, when the first buffer is about to be full but not full, the obtaining of the to-be-transmitted data from the first memory is paused, so as to avoid the problem of deadlocks, until the current buffer state of the first buffer can support buffering the to-be-transmitted data from both the first memory and the second processing element. Further, the obtaining of the to-be-transmitted data from the first memory is restarted and the to-be-transmitted data is buffered into the first buffer, thereby keeping data transmission efficiency while ensuring no deadlocks.

In some optional embodiments, on the basis of any one of the foregoing embodiments, the first processing element 1i is configured to:
in response to that the data transmission priority of the second processing element 1k is higher than that of the first memory 1i2, obtain the to-be-transmitted data from the second processing element 1k; or in response to that the data transmission priority of the second processing element 1k is same as that of the first memory 1i2, obtain the to-be-transmitted data from the second processing element 1k and the first memory 1i2.

When the data transmission priority of the second processing element 1k is higher than that of the first memory 1i2, the to-be-transmitted data is preferentially obtained from the second processing element 1k, so that the second processing element 1k can release a part of buffer space, thereby avoiding a situation where all buffers on the data transmission path are full. After the to-be-transmitted data is preferentially obtained from the second processing element 1k and is buffered into the first buffer 1i1, if the first buffer 1i1 can still store the data from the first memory 1i2, the to-be-transmitted data may continue to be obtained from the first memory 1i2 and may be buffered into the first buffer 1i1.

It should be noted that in the embodiments of this disclosure, for any processing element 1i, the to-be-transmitted data is a collective term for data that needs to be transmitted at a current time and varies in a real-time manner, rather than any specific data. In other words, data that is to be transmitted and is obtained at any moment is referred to as to-be-transmitted data, the data obtained from the second processing element 1k may be referred to as to-be-transmitted data, and the data obtained from the first memory 1i2 may also be referred to as to-be-transmitted data. At a same moment, if there are both the first data from the second processing element 1k and the second data from the first memory 1i2, according to the data transmission priority between the second processing element 1k and the first memory 112, it is determined whether to use the first data or the second data as the to-be-transmitted data, or to use both the first data and the second data as the to-be-transmitted data.

In the embodiments of this disclosure, when the data transmission priority of the second processing element 1k is higher than that of the first memory 1i2, and the to-be-transmitted data is obtained from the second processing element 1k, so that the buffer of the second processing element 1k can release a part of buffer space, so as to ensure that there is always at least one buffer that is not full on the data transmission path, thereby effectively avoiding the problem of deadlocks. When the data transmission priority of the second processing element 1k is same as that of the first memory 1i2, the to-be-transmitted data may be respectively obtained from the second processing element 1k and the first memory 1i2, thereby ensuring the data transmission efficiency.

In some optional embodiments, the first arbiter 1i4 is further configured to:
in response to that the current buffer state is the first preset state, pause the obtaining of the to-be-transmitted data.

If the current buffer state of the first buffer 1i1 is the first preset state, it indicates that the first buffer 1i1 is currently in the full storage status and cannot store new data. Therefore, pausing the obtaining of the to-be-transmitted data can effectively avoid data losses caused by that the obtained data cannot be buffered.

In some optional embodiments, after the obtaining of the to-be-transmitted data is paused, the following steps may also be included: in response to that the current buffer state changes to the second preset state, restarting obtaining the to-be-transmitted data from the second processing element 1k; and in response to that the current buffer state changes to the third preset state or the fourth preset state, restarting obtaining the to-be-transmitted data from the second processing element 1k and the first memory 1i2. In this way, based on real-time changes in the buffer state of the first buffer 1i1, the data source of the to-be-transmitted data may be dynamically adjusted or the obtaining of the to-be-transmitted data may be paused, so as to ensure successful data transmission on the data transmission path, thereby avoiding the problem of deadlocks.

In some optional embodiments, the current buffer state of the first buffer 1i1 may be represented by using a combination of different preset values of the first state signal, the second state signal, the third state signal, and the fourth state signal. To be specific, the data transmission priority between the second processing element 1k and the first memory 1i2 may be directly determined based on a specific condition of the state signal output by the first buffer 1i1. The operations of determining the current buffer state based on the state signal and then determining the data transmission priority according to the current buffer state may be simplified as determining the data transmission priority based on the state signal. For example, the first arbiter 114 is configured to: in response to that the first state signal is the second preset value and the second state signal is the first preset value, determine that the data transmission priority is to preferentially obtain the to-be-transmitted data from the second processing element 1k, that is, the priority of the second processing element 1k is higher than that of the first memory 1i2; and in response to that the second state signal is the second preset value and/or the third state signal is the first preset value, determine that the data transmission priority indicates that the priority of the second processing element 1k is same as that of the first memory 1i2.

In some optional embodiments, the first arbiter is 1i4 is further configured to: in response to that the first state signal is the second preset value and the second state signal is the first preset value, determine that the data transmission priority is to only obtain the first data from the second processing element 1k to serve as the to-be-transmitted data, and pause the obtaining of data from the first memory 1i2; and in response to that the second state signal changes to the second preset value and/or the third state signal changes to the first preset value, restart obtaining the to-be-transmitted data from the first memory 1i2 and buffer the to-be-transmitted data into the first buffer 1i1.

In some optional embodiments, the first arbiter 1i4 is further configured to: pause the obtaining of the to-be-transmitted data in response to that the first state signal is the first preset value.

In some optional embodiments, functions of the first arbiter 1i4 according to any one of the foregoing embodiments can be implemented through one or more hardware logic devices such as a comparator, a data selector, an AND gate, an OR gate, and a NOT gate. For example, a logical component that determines the current cache status based on the state signal is composed of the AND gate, the OR gate, and the NOT gate, to trigger logical components with data transmission priority in different preset states. The logic components with the data transmission priority may gate the second processing element 1k and the first memory 1i2 through the data selector, and may also pause or restart the obtaining of the to-be-transmitted data through enable control of the data selector. A specific structure of the first arbitrator is not described. Implementing the first arbiter through hardware may effectively improve processing efficiency, thereby enhancing real-time performance of data transmission.

In some optional embodiments, there are two different types of data transmission priority when the current buffer state of the first buffer is the second preset state: preferentially obtaining the to-be-transmitted data from the second processing element (which is referred to as a first type), and obtaining the to-be-transmitted data merely from the second processing element and pause the obtaining of data from the first memory (which is referred to as a second type). For any two processing elements in the integrated circuit, the two processing elements may both be of the first type or the second type, or the two processing elements may respectively be of the first type and the second type. This is not specifically limited.

FIG. 4 is a schematic diagram of a structure of a processing element according to an exemplary embodiment of this disclosure.

In some optional embodiments, as shown in FIG. 4, the first interface 1i3 may include a second arbiter 1i31.

The second arbiter 1i31 is configured to:
receive third data from the second processing element 1k; and transmit the third data to the first arbiter 1i4 and/or store the third data into the first memory 1i2 according to configured transmission control information.

The transmission control information is configuration information pre-configured to control a flow manner of data (referred to as the third data) that is from the second processing element 1k. The transmission control information may include control information indicating whether to transmit the third data from the second processing element 1k to the first arbiter 1i4, and whether to store the third data in the local first memory 1i2.

In some optional embodiments, if, according to the transmission control information, it is determined that it is merely needed to transmit the third data to the first arbiter 1i4, the third data is transmitted to the first arbiter 1i4, without being stored in the local first memory 1i2. If, according to the transmission control information, it is determined that it is merely needed to store the third data in the local first memory 1i2, the third data is stored in the local first memory 1i2. If, according to the transmission control information, it is determined that it is needed to transmit the third data to the first arbiter 1i4 and store the same in the local first memory 1i2, the third data is transmitted to the first arbiter 1i4 and is stored in the local first memory 1i2. The specific data flow path is set according to actual requirements, which is not limited in the embodiments of this disclosure. For example, in the scenario of intelligent driving, the perception result of the perception processing element may be stored in a local memory in the positioning processing element, may be buffered in a buffer through the first arbiter of the positioning processing element, and further be transmitted to the planning and control element through the buffer. The perception result stored in the local memory of the positioning processing element may be used for positioning processing to obtain the positioning result. The positioning result is stored in the local memory. Further, the positioning result stored in the local memory is buffered in a buffer through the first arbiter, and is transmitted to the planning and control element through the buffer. The planning and control element may read the perception result and the positioning result from the buffer of the positioning processing element, and then plan and control based on the perception result and the positioning result, to control a driving status of the vehicle.

In some optional embodiments, the second arbiter 1i31 is connected to the first arbiter 1i4 and the first memory 1i2, respectively.

In some optional embodiments, if the third data from the second processing element 1k is transmitted to the first arbiter 1i4, the third data is used as the first data from the second processing element in the above embodiments.

In the embodiments of this disclosure, flow of data from the second processing element is controlled by the second arbiter in the first interface, so that the processing element can obtain required data or transmit the data to a next processing element, thereby achieving effective data flow and ensuring normal operation of the processing element.

In some optional embodiments, the second arbiter 1i31 may be implemented in any of the following ways: hardware, software, or a combination of hardware and software. For example, the second arbiter 1i31 may implement a corresponding arbitration function through a combinational logic circuit, to ensure real-time data transmission.

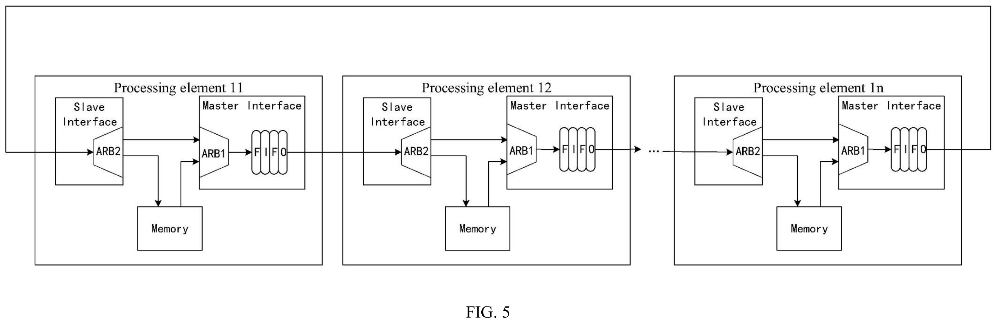

In some optional embodiments, the first processing element 1i may include a second interface, which includes the first arbiter 1i4 and the first buffer 1i1. The first interface 1i3 may be referred to as a slave interface, and the second interface may be referred to as a master interface. FIG. 5 is a schematic diagram of a structure of an integrated circuit for data transmission according to still another exemplary embodiment of this disclosure. As shown in FIG. 5, each processing element 1i includes a slave interface (that is, the first interface 1i3), a master interface (that is, the second interface), and a memory (that is, the first memory). The master interface includes a first arbiter (that is, an ARB 1) and a first buffer (taking FIFO in FIG. 5 as an example). The slave interface includes an ARB 2 (that is, the second arbitrator). A data loop is indicated by directions of arrows in FIG. 5. The processing element 11 receives data A from the processing element 1n through the slave interface, that is, reads the data A from the FIFO of the processing element 1n through the slave interface, so that the FIFO of the processing element 1n releases a part of buffer space to continue to transmit new data. The ARB 2 transmits the data A to the first ARB 1 and/or stores the data A into the memory based on the configured transmission control information. When the data A is transmitted to the ARB 1 and there is also to-be-transmitted data B in the memory of the processing element 11, the ARB 1 in the processing element 11 determines data transmission priority between the processing element 1n and the memory in the processing element 11 based on a state signal of the FIFO, and takes the data A and/or the data B as to-be-transmitted data according to the data transmission priority. For example, if the data transmission priority of the processing element 1n is higher than that of the memory in the processing element 11, the data A is preferentially used as to-be-transmitted data. If the data transmission priority of the processing element 1n is same as that of the memory in the processing element 11, both the data A and the data B are used as to-be-transmitted data, which is buffered into the FIFO. The circuit cascaded subsequently to the processing element 11 (such as the processing element 12) reads data C (which may be the data A and/or the data B, or may be data buffered before the data A and/or the data B is buffered) from the FIFO of the processing element 11 through the slave interface, so that the FIFO of the processing element 11 releases a part of buffer space. Others may be deduced by analogy, so that there is always at least one FIFO in the data loop that has idle buffer space, thereby ensuring data transmission efficiency and avoiding a situation where all FIFOs are full. For example, without considering priority, the processing element 11 may continue to obtain the to-be-transmitted data from the processing element 1n and the memory, that is, cache both the data A and the data B obtained each time into the FIFO. Due to limited buffer space of the FIFOs, data from the memory is constantly added, and there is also data from other FIFOs. As a result, each FIFO may be full. For example, after loop data transmission is performed once, only the FIFO of the processing element 11 has very little idle buffer space, while FIFOs of other processing elements are already full. In this case, if the processing element 11 further obtains the data B from the memory and caches the same into the FIFO, the FIFO of the processing element 11 may also be full. As a result, all FIFOs on the loop are full and there is no remaining idle buffer space to support data flow on the loop. In other words, a problem of deadlocks is caused to the loop. For any one first processing element in the embodiments of this disclosure, since a data source of data to be buffered into the FIFO may be determined based on a real-time buffer state of an internal FIFO, when the idle buffer space of the FIFO is small, it is preferentially to cache the data from the FIFO of the second processing element cascaded preceding into the FIFO within the first processing element, that is, to make the FIFO within the first processing element full in this case. Since the data buffered this time comes from the FIFO of the second processing element, the FIFO of the second processing element releases a part of buffer space. Therefore, it can continue to support flow of the loop data, so that it may be ensured that there is always at least one FIFO that is not full in the loop, thereby effectively avoiding a problem of deadlocks in loop data transmission.

In some optional embodiments, the master interface in the first processing element 1i may include a control unit, which is connected to a local FIFO and a subsequently cascaded circuit, respectively. When there is valid data in the FIFO, the control unit may raise (indicating valid) a valid (valid data) signal connected to the subsequently cascaded circuit, to enable the subsequently cascaded circuit to read data from the FIFO buffer. A reading/writing principle of the FIFO is not described.

The foregoing embodiments of this disclosure may be implemented separately or in any combination without conflict. This may be specifically set according to actual requirements, and is not limited in this disclosure.

### Exemplary method

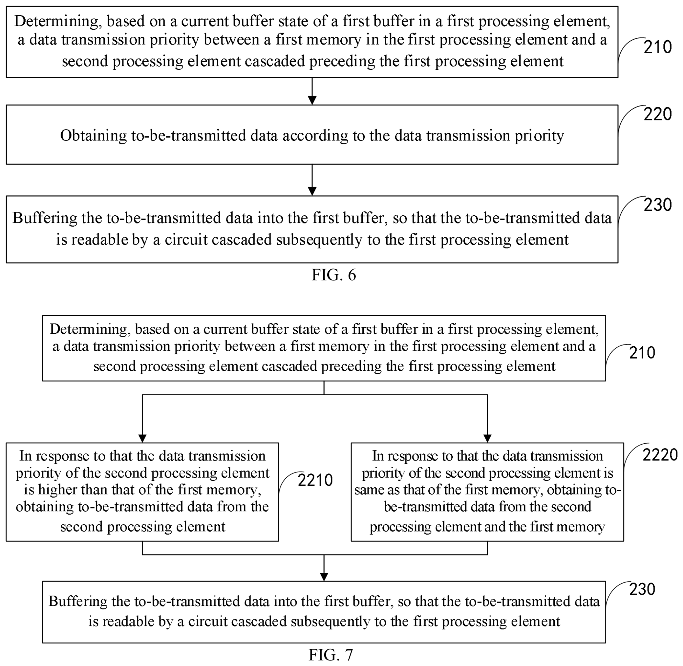

FIG. 6 is a schematic flowchart of a data transmission method according to an exemplary embodiment of this disclosure. The data transmission method in this embodiment may be implemented by using a corresponding integrated circuit in this disclosure. The data transmission method shown in FIG. 6 may include the following steps.

Step 210: Determining, based on a current buffer state of a first buffer in a first processing element, a data transmission priority between a first memory in the first processing element and a second processing element cascaded preceding the first processing element.

Step 220: Obtaining to-be-transmitted data according to the data transmission priority.

Step 230: Buffering the to-be-transmitted data into the first buffer, so that the to-be-transmitted data is readable by a circuit cascaded subsequently to the first processing element.

For specific structures and an interconnection relationship of the first processing element and the second processing element, and specific operations of each step, reference may be made to the foregoing embodiments, and details are not described herein again.

FIG. 7 is a schematic flowchart of a data transmission method according to another exemplary embodiment of this disclosure.

In some optional embodiments, on the basis of the embodiment shown in FIG. 6, step 220 of obtaining to-be-transmitted data according to the data transmission priority may include:
Step 2210: In response to that the data transmission priority of the second processing element is higher than that of the first memory, obtaining the to-be-transmitted data from the second processing element; and
Step 2220: In response to that the data transmission priority of the second processing element is same as that of the first memory, obtaining the to-be-transmitted data from the second processing element and the first memory.

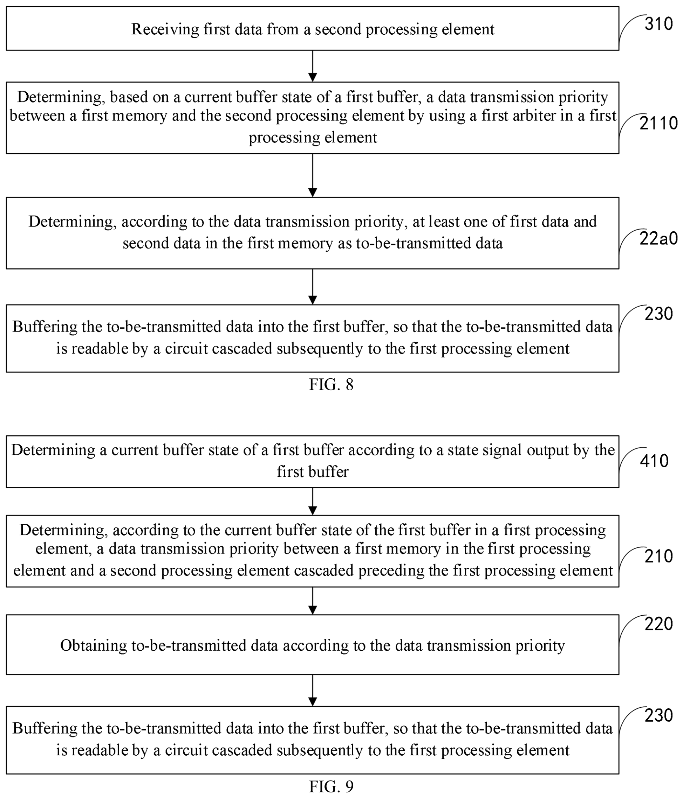

FIG. 8 is a schematic flowchart of a data transmission method according to still another exemplary embodiment of this disclosure.

In some optional embodiments, on the basis of any one of the foregoing embodiments, the method in this embodiment of this disclosure may further include:
Step 310: Receiving first data from the second processing element based on a first interface in the first processing element.

Step 210 of determining, based on a current buffer state of a first buffer in a first processing element, a data transmission priority between a first memory in the first processing element and a second processing element cascaded preceding the first processing element may include:
Step 2110: Determining, according to the current buffer state of the first buffer, the data transmission priority between the first memory and the second processing element by a first arbiter in the first processing element.

Step 220 of obtaining to-be-transmitted data according to the data transmission priority may include:
Step 22a0: Determining, according to the data transmission priority, at least one of the first data and second data in the first memory as the to-be-transmitted data.

FIG. 9 is a schematic flowchart of a data transmission method according to yet another exemplary embodiment of this disclosure.

In some optional embodiments, on the basis of any one of the foregoing embodiments, the method in this embodiment of this disclosure may further include:

Step 410: Determining the current buffer state of the first buffer according to a state signal output by the first buffer.

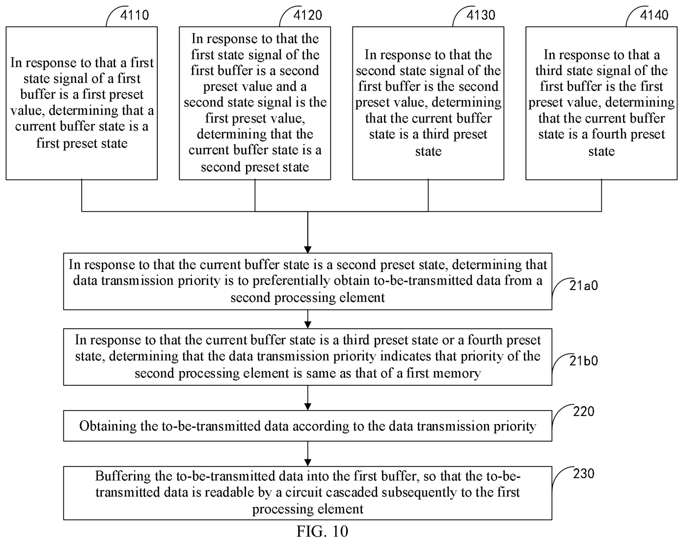

FIG. 10 is a schematic flowchart of a data transmission method according to still yet another exemplary embodiment of this disclosure.

In some optional embodiments, the state signal includes a first state signal, a second state signal, and a third state signal. As shown in FIG. 10, step 410 of determining the current buffer state of the first buffer according to a state signal output by the first buffer may include:
Step 4110: In response to that a first state signal of the first buffer is a first preset value, determining that the current buffer state is a first preset state;
Step 4120: In response to that the first state signal of the first buffer is a second preset value and a second state signal is the first preset value, determining that the current buffer state is a second preset state;
Step 4130: In response to that the second state signal of the first buffer is the second preset value, determining that the current buffer state is a third preset state; and
Step 4140: In response to that a third state signal of the first buffer is the first preset value, determining that the current buffer state is a fourth preset state.

In some optional embodiments, as shown in FIG. 10, step 210 of determining, based on a current buffer state of a first buffer in a first processing element, a data transmission priority between a first memory in the first processing element and a second processing element cascaded preceding the first processing element may include:
Step 21a0: In response to that the current buffer state is a second preset state, determining that the data transmission priority is to preferentially obtain the to-be-transmitted data from the second processing element; and
Step 21b0: In response to that the current buffer state is a third preset state or a fourth preset state, determining that the data transmission priority indicates that priority of the second processing element is same as that of the first memory.

It should be noted that steps 21a0 and 21b0 are not executed in a sequential order.

In some optional embodiments, step 210 of determining, based on a current buffer state of a first buffer in a first processing element, a data transmission priority between a first memory in the first processing element and a second processing element cascaded preceding the first processing element may include: in response to that the current buffer state is a second preset state, determining that the data transmission priority is to obtain the first data only from the second processing element to serve as the to-be-transmitted data, and pausing obtaining of data from the first memory.

In some optional embodiments, the method in this embodiment of this disclosure may further include: after the obtaining of data from the first memory is paused, in response to that the current buffer state changes to the third preset state or the fourth preset state, restarting obtaining to-be-transmitted data from the first memory and buffering the to-be-transmitted data into the first buffer.

In some optional embodiments, the method in this embodiment of this disclosure may further include: in response to that the current buffer state is the first preset state, pausing the obtaining of the to-be-transmitted data.

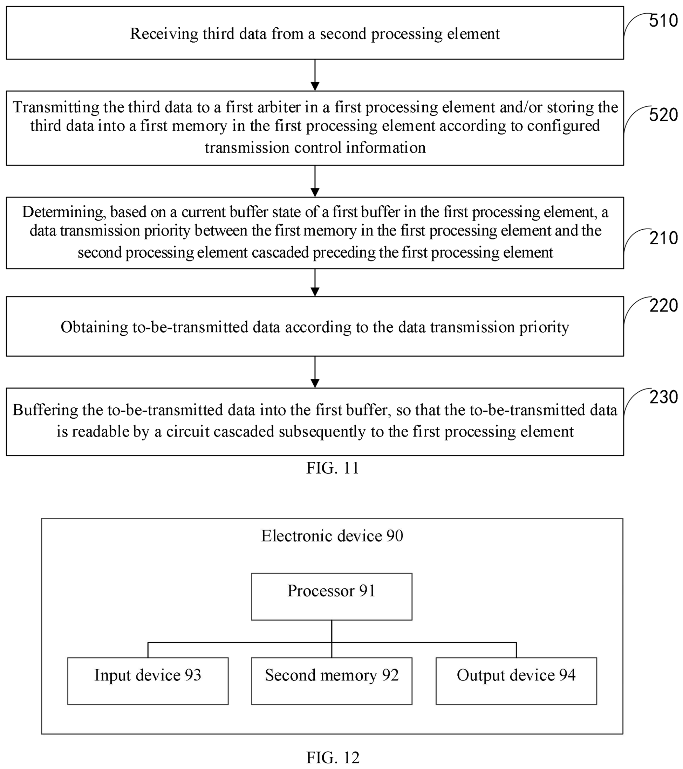

FIG. 11 is a schematic flowchart of a data transmission method according to a further exemplary embodiment of this disclosure.

In some optional embodiments, on the basis of any one of the foregoing embodiments, as shown in FIG. 11, the data transmission method in this embodiment of this disclosure may further include:
Step 510: Receiving third data from the second processing element; and
Step 520: Transmitting the third data to the first arbiter in the first processing element and/or storing the third data into the first memory in the first processing element according to configured transmission control information.

The steps in the foregoing embodiments of this disclosure may be executed by corresponding components in the foregoing embodiments of the integrated circuit, and details are not described herein.

The foregoing embodiments of this disclosure may be implemented separately or in any combination without conflict. This may be specifically set according to actual requirements, and is not limited in this disclosure.

For beneficial technical effects corresponding to the exemplary embodiments of this method, reference may be made to the corresponding beneficial technical effects in the section of exemplary integrated circuit described above, and details are not described herein again.

Any data transmission method provided in the embodiments of this disclosure may be implemented by any suitable electronic device with a data processing capability, including but not limited to a terminal device, a server, and other electronic devices. Alternatively, any data transmission method provided in the embodiments of this disclosure may be implemented by the processor. For example, the processor implements any data transmission method described in the embodiments of this disclosure by invoking corresponding instructions stored in the memory. Details are not described below.

### Exemplary electronic device

FIG. 12 is a diagram of a structure of an electronic device according to an embodiment of this disclosure. The electronic device includes at least one processor 91 and a second memory 92.

The processor 91 may be a central processing unit (CPU) or another form of processing unit having a data processing capability and/or an instruction execution capability, and may control other components in the electronic device 90 to implement desired functions.

The second memory 92 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 91 may execute the one or more program instructions to implement the method according to various embodiments of this disclosure that are described above and/or other desired functions.

In an example, the electronic device 90 may further include an input device 93 and an output device 94. These components are connected to each other through a bus system and/or another form of connection mechanism (not shown).

The input device 93 may further include a touch screen, a microphone, and various sensors. The sensors may include, for example, an image sensor (such as a camera or a lens), a laser radar, a millimeter wave radar, an ultrasonic radar, a positioning sensor, a pressure sensor, an air quality sensor, and a temperature sensor. The image sensor, the laser radar, the millimeter wave radar, and the ultrasonic radar may be used to sense surrounding environments, that is, to detect dynamic and static objects in the surrounding environments. The dynamic and static objects may include static objects such as a lane marking, a road edge, an arrow, a sign, a trees, and a building, and dynamic objects such as a surrounding vehicle, a pedestrian, and a cyclist. The positioning sensor is used to locate a mobile device (such as a vehicle or a robot) where the electronic device is located. The positioning sensor may include, for example, an inertial measurement unit (IMU for short) and a global positioning system (GPS for short). The pressure sensor may be used to detect seat pressure. The temperature sensor may be used to detect temperature inside a vehicle cockpit. The air quality sensor may be used to detect air quality inside the vehicle cockpit.

The output device 94 may output various information to the outside, and may include, for example, a display, a speaker, a communication network, and a remote output device connected to the communication network.

Certainly, for simplicity, FIG. 12 shows only some of components in the electronic device 90 that are related to this disclosure, and components such as a bus and an input/output interface are omitted. In addition, according to specific application situations, the electronic device 90 may further include any other appropriate components.

In addition, an embodiment of this disclosure further provides a chip, which includes the integrated circuit for data transmission according to any one of the foregoing embodiments.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. An integrated circuit for data transmission, **characterized in that** the integrated circuit comprises:
at least two processing elements, wherein any first processing element (1i) in the at least two processing elements comprises a first buffer (1i1) and a first memory (1i2), and the first processing element (1i) is configured to:
determine, according to a current buffer state of the first buffer (1i1), a data transmission priority between the first memory (1i2) and a second processing element cascaded preceding the first processing element (1i);
obtain to-be-transmitted data according to the data transmission priority; and
buffer the to-be-transmitted data into the first buffer (1i1), so that the to-be-transmitted data is readable by a circuit cascaded subsequently to the first processing element (1i).

2. The integrated circuit according to claim 1, wherein the first processing element (1i) is configured to:
in response to that the data transmission priority of the second processing element is higher than that of the first memory (1i2), obtain the to-be-transmitted data from the second processing element; or
in response to that the data transmission priority of the second processing element is same as that of the first memory (1i2), obtain the to-be-transmitted data from the second processing element and the first memory (1i2).

3. The integrated circuit according to claim 1, wherein the first processing element (1i) further comprises:
a first interface (1i3), configured to receive first data from the second processing element; and
a first arbiter (114), wherein the first arbiter (1i4) is configured to:
determine the data transmission priority between the first memory (1i2) and the second processing element according to the current buffer state of the first buffer (1i1); determine, according to the data transmission priority, at least one of the first data received by the first interface (1i3) and second data in the first memory (1i2) as the to-be-transmitted data; and buffer the to-be-transmitted data into the first buffer (1i1).

4. The integrated circuit according to claim 3, wherein the first arbiter (1i4) is further configured to:
determine the current buffer state of the first buffer (1i1) according to a state signal output by the first buffer (1i1).

5. The integrated circuit according to claim 4, wherein the state signal comprises a first state signal, a second state signal, and a third state signal; and the first arbiter (1i4) is further configured to:
in response to that the first state signal is a first preset value, determine that the current buffer state is a first preset state; or
in response to that the first state signal is a second preset value and the second state signal is the first preset value, determine that the current buffer state is a second preset state; or
in response to that the second state signal is the second preset value, determine that the current buffer state is a third preset state; or
in response to that the third state signal is the first preset value, determine that the current buffer state is a fourth preset state.

6. The integrated circuit according to claim 3, wherein the first arbiter (114) is configured to:
in response to that the current buffer state is a second preset state, determine that the data transmission priority is to preferentially obtain the to-be-transmitted data from the second processing element; or
in response to that the current buffer state is a third preset state or a fourth preset state, determine that the data transmission priority indicates that priority of the second processing element is same as that of the first memory (1i2).

7. The integrated circuit according to claim 3, wherein the first arbiter (1i4) is configured to:
in response to that the current buffer state is a second preset state, determine that the data transmission priority is to obtain the first data only from the second processing element to serve as the to-be-transmitted data, and pause obtaining of data from the first memory (1i2).

8. The integrated circuit according to claim 7, wherein the first arbiter (114) is configured to:
after the obtaining of data from the first memory (1i2) is paused, in response to that the current buffer state changes to a third preset state or a fourth preset state, restart obtaining to-be-transmitted data from the first memory (1i2) and buffer the to-be-transmitted data into the first buffer (1i1).

9. The integrated circuit according to claim 3, wherein the first arbiter (1i4) is configured to:
in response to that the current buffer state is a first preset state, pause the obtaining of the to-be-transmitted data.

10. The integrated circuit according to claim 3, wherein the first interface (1i3) comprises a second arbiter (1i31); and
the second arbiter (1i31) is configured to:
receive third data from the second processing element; and
transmit the third data to the first arbiter (1i4) and/or store the third data into the first memory (1i2) according to configured transmission control information.

11. A data transmission method, comprising:
Determining (210), based on a current buffer state of a first buffer in a first processing element, a data transmission priority between a first memory in the first processing element and a second processing element cascaded preceding the first processing element;
Obtaining (220) to-be-transmitted data according to the data transmission priority; and
buffering (230) the to-be-transmitted data into the first buffer, so that the to-be-transmitted data is readable by a circuit cascaded subsequently to the first processing element.

12. The method according to claim 11, wherein the obtaining (220) to-be-transmitted data according to the data transmission priority comprises:
in response to that the data transmission priority of the second processing element is higher than that of the first memory, obtaining (2210) the to-be-transmitted data from the second processing element; and
in response to that the data transmission priority of the second processing element is same as that of the first memory, obtaining (2220) the to-be-transmitted data from the second processing element and the first memory.

13. A computer readable storage medium, storing a computer program, which, when executed by a processor, causes the processor to implement the data transmission method according to claim 11.

14. An electronic device, **characterized in that** the electronic device comprises:
a processor (91); and
a second memory (92), configured to store processor-executable instructions, wherein
the processor (91) is configured to read the executable instructions from the second memory (92), and execute the instructions to implement the data transmission method according to claim 11.

15. A chip, **characterized in that** the chip comprises:
the integrated circuit for data transmission according to any one of claims 1 to 10.
